# EUROPÄISCHE PATENTSCHRIFT

(11) **EP 0 761 520 B1**
(45) Veröffentlichungstag und Bekanntmachung des Hinweises auf die Patenterteilung: **09.02.2000**
(21) Anmeldenummer: 96114511.7
(22) Anmeldetag: 11.09.1996
(51) Int. Cl.: B60T 13/16

(54) **Ventilanordung für einen Fremdkraft-Bremskreis einer hydraulischen Bremsanlage**
Valve arrangement for a servo brake circuit of a hydraulic brake system
Arrangement de soupapes pour circuit de freinage assisté d'un système de freinage hydraulique

(30) Priorität: 12.09.1995 DE 19533482
(43) Veröffentlichungstag der Anmeldung: 12.03.1997
(73) Patentinhaber: FTE automotive GmbH, 96106 Ebern (DE)
(72) Erfinder: Heubner, Wilhelm, Dipl.-Ing. (FH), 96274 Kaltenbrunn (DE)
(74) Vertreter: Oppermann, Ewald, Dipl.-Ing.

(56) Entgegenhaltungen:
- EP-A- 0 356 669
- WO-A-89/09711
- DE-A- 2 450 874
- DE-A- 3 705 311
- DE-A- 3 813 172
- DE-A- 3 905 044
- GB-A- 2 086 506

## Beschreibung

Die Erfindung bezieht sich auf eine Ventilanordnung für einen Fremdkraft-Bremskreis einer hydraulischen Bremsanlage gemäß dem Oberbegriff des Patentanspruchs 1. Insbesondere bezieht sich die Erfindung auf eine Ventilanordnung, mittels der die Fremdkraft am Zuspannorgan über einen beim Durchströmen eines Drosselspalts mit einem Druckmittel erzeugten Staudruck aufgebracht wird, der durch Verstellen des Drosselspalts definiert eingestellt werden kann, und die bei Ausfall der Fremdkraftunterstützung eine definierte Restbremskraft am Zuspannorgan bei geringem vorrichtungstechnischen Aufwand aufbringen kann.

Hydraulische Bremsanlagen für Kraftfahrzeuge werden heutzutage üblicherweise als Hilfskraft-Bremsanlage oder Fremdkraft-Bremsanlage ausgeführt. Bei einer Hilfskraft-Bremsanlage geht die zur Erzeugung der Bremskraft benötigte Energie von der physischen Kraft des Fahrzeugführers und einer oder mehreren Energieversorgungseinrichtungen aus, d.h. beim Bremsvorgang wird ein Teil der Bremskraft über einen mit einem manuell betätigbaren Bremspedal verbundenen Geberzylinder direkt an den Zuspannorganen aufgebracht, während der andere Teil der Bremskraft als Servokraft von beispielsweise einer Hydraulikpumpe aufgebracht wird. Im Gegensatz dazu geht bei einer Fremdkraft-Bremsanlage die zur Erzeugung der Bremskraft benötigte Energie von einer oder mehreren Energieversorgungseinrichtungen, ausgenommen der physischen Kraft des Fahrzeugführers, aus, d.h. der mit dem Bremspedal verbundene Geberzylinder dient nicht einer direkten Aufbringung der Bremskraft an den Zuspannorganen, sondern lediglich der Ansteuerung der an den Zuspannorganen angreifenden Servokraft. Gemein ist beiden Arten von Bremsanlagen, daß sie einen Servo- bzw. Fremdkraft-Bremskreis aufweisen.

Aus der den Oberbegriff des Patentanspruchs 1 bildenden DE-AS 1 134 904 ist ein Bremskraftverstärker für eine Fremdkraft-Bremsanlage bekannt, bei der die Servokraft über ein Druckumlaufsystem erzeugt wird. Dazu hat der Bremskraftverstärker eine an den Ausgang einer Hydraulikpumpe angeschlossene Druckkammer, die mit den Zuspannorganen verbunden ist, und eine an einen Vorratsbehälter angeschlossene Ablaufkammer, die über ein Drosselventil mit der Druckkammer verbunden ist. Das Drosselventil weist einen Ventilkörper auf, der zusammen mit einer im Bremskraftverstärker ortsfest angeordneten Buchse den Drossel- bzw. Ventilspalt des Drosselventils begrenzt und mit dem Bremspedal verbunden ist, so daß der Ventilspalt des Drosselventils in Abhängigkeit von der Stellung des Bremspedals verstellbar ist, um einen zum Hub des Bremspedals proportionalen Staudruck in der Druckkammer zu erzeugen. Der Staudruck wird über einen in der Druckkammer geführten Kolben mit einer Durchgangsbohrung den Zuspannorganen zugeführt. Der Staudruck wirkt auch über die dem Kolben zugewandte hydraulische Wirkfläche des Ventilkörpers auf das Bremspedal zurück. Diese Rückmeldung des am Drosselventil anliegenden Staudrucks zum Bremspedal hin ermöglicht eine gefühlvolle Betätigung des Bremspedals unter Berücksichtigung des jeweils in den Zuspannorganen herrschenden Bremsdrucks.

Bei Ausfall der Hydraulikpumpe ist zur Erzeugung der erforderlichen Restbremskraft an den Zuspannorganen eine mechanische Ansteuerung des Bremskreises möglich, wozu ein weiteres Ventilelement vorgesehen ist, das mit dem Ventilkörper zur Anlage gebracht werden kann, wenn dieser soweit in die Buchse verschoben wurde, daß das Drosselventil verschlossen ist. Das weitere Ventilelement ist nun über den Ventilkörper gegen die Kraft einer Rückstellfeder in Richtung auf den in der Druckkammer geführten Kolben verschiebbar, um die Durchgangsbohrung in dem Kolben zu verschließen, so daß die Zuspannorgane über den Kolben ansteuerbar sind.

Obgleich durch Rückmeldung des Staudrucks an das Bremspedal eine gefühlvolle Betätigung der Bremsanlage möglich ist, weist dieser Stand der Technik den Nachteil auf, daß die Integration der Restbremsfunktion in dem Bremskraftverstärker mit einer hohen Anzahl von Bauteilen und einem großen Bauraum vorrichtungstechnisch relativ aufwendig gelöst ist.

Auch für Hilfskraft-Bremsanlagen sind derartige Bremskraftverstärker, die mit einem Drosselventil nach dem Staudruckprinzip arbeiten, bekannt. So beschreibt die DE-PS 1 180 259 einen Bremskraftverstärker, der sich von dem oben beschriebenen Bremskraftverstärker im wesentlichen dadurch unterscheidet, daß der in der Druckkammer angeordnete Kolben von dem mit dem Bremspedal verbundenen Ventilkörper auch im normalen Bremsbetrieb mechanisch beaufschlagt wird, während anstelle des weiteren Ventilelements ein Rückschlagventil in der Durchgangsbohrung des Kolbens angeordnet ist, das entgegen der Betätigungsrichtung des Ventilkörpers in seine geschlossene Stellung vorgespannt ist und dem Druckmittel den Weg nur in Richtung auf die Zuspannorgane freigibt.

Ferner ist ein zusätzlicher Druckraum mit einem darin aufgenommenen weiteren Kolben vorgesehen, der zwischen dem Ventilkörper des Drosselventils und dem Kolben in der Druckkammer angeordnet ist, um eine dem Staudruck proportionale Reaktionskraft am Ventilkörper und somit am Bremspedal aufzubringen.

Ein Nachteil dieses Bremskraftverstärkers ist darin zu sehen, daß nicht nur die Integration der Restbremsfunktion im Bremskraftverstärker, sondern auch die Rückmeldung des am Drosselventil anliegenden Staudrucks zum Bremspedal hin einen großen vorrichtungstechnischen Aufwand, d.h. eine große Anzahl von Bauteilen sowie ventilseitig einen großen Bauraum erfordert. Zudem ist bei Betätigung des Bremspedals die Masse des weiteren Kolbens mit zu bewegen und die Reibkraft zwischen dem weiteren Kolben und der Innenwandung des zusätzlichen Druckraums zu überwinden, was bei Ausfall der Servokraft die zur Erzeugung der erforderlichen Restbremskraft am Bremspedal benötigte Betätigungskraft zusätzlich erhöht.

Desweiteren zeigt die DE-PS 1 037 287 einen Bremskraftverstärker für eine Fremdkraft-Bremsanlage, bei der der Bremskreis vom Servokreis getrennt ist. Auch dieser Stand der Technik arbeitet mit einem Drosselventil nach dem Staudruckprinzip. Durch die Ablaufkammer dieses Bremskraftverstärkers erstreckt sich ein Ventilkörper hindurch, dessen eines Ende von dem mit dem Bremspedal verbundenen Geberzylinder hydraulisch ansteuerbar ist, und dessen anderes Ende in die Druckkammer des Servokreises hineinragt. Der Ventilkörper ist am in die Druckkammer des Servokreises hineinragenden Ende mit einer mittigen Sackbohrung versehen, an deren Grund eine Querbohrung angebracht ist, um die Druckkammer des Servokreises mit der Ablaufkammer zu verbinden. Das in die Druckkammer des Servokreises hineinragende Ende des Ventilkörpers bildet mit dem geschlossenen Boden eines konzentrisch zum Ventilkörper angeordneten Plungerkolbens, der sich abgedichtet durch eine Trennwand zwischen der Druckkammer des Servokreises und der Druckkammer des Bremskreises hindurcherstreckt, das Drosselventil aus.

Obgleich dieser Stand der Technik den Vorteil hat, daß durch Trennung des Servokreises von dem Bremskreis eine bereits im Kraftfahrzeug vorhandene Servoquelle mit beispielsweise einem anderen Betriebsmedium für den Servokreis genutzt werden kann, bestehen hier Probleme hinsichtlich der wegabhängigen Steuerung des Ventilspalts des Drosselventils. Einerseits ist die geberzylinderseitige hydraulische Wirkfläche des Ventilkörpers zu klein, um bei Ausfall der Servokraft die erforderliche Restbremskraft mit angemessener Betätigungskraft am Bremspedal über den Geberzylinder hydraulisch aufzubringen. Andererseits ist die geberzylinderseitige hydraulische Wirkfläche des Ventilkörpers so groß, daß sie im normalen Bremsbetrieb einen großen Druckmittelbedarf bzw. Hub am Geberzylinder mit entsprechend hoher Betätigungskraft am Bremspedal erfordert, um den Ventilspalt des Drosselventils und somit die Servokraft einzustellen. Auch führt während des normalen Bremsbetriebs der sich bei Verschiebung des Ventilkörpers durch Druckbeaufschlagung über den Geberzylinder zum Plungerkolben hin am Ventilspalt des Drosselventils einstellende Regelvorgang dazu, daß das mit der Betätigungskraft beaufschlagte Bremspedal nachgibt, was auch als Weglaufen des Bremspedals bezeichnet wird. Im Ergebnis ist festzuhalten, daß sowohl bei normalem Bremsbetrieb mit Servounterstützung als auch bei Ausfall der Servokraft der in den Zuspannorganen wirkende Bremsdruck nicht hinreichend feinfühlig über das Bremspedal eingestellt werden kann, so daß ein gutes Betätigungs- bzw. Pedalgefühl nicht gegeben ist.

Schließlich ist beispielsweise aus der DE 36 03 074 C2 oder der DE 37 02 573 A1 die Verwendung elektromagnetisch angesteuerter Kugelsitzventile in Druckmodulatoren für hydraulische Bremsanlagen mit Antiblockiersystem (ABS) prinzipiell bekannt. Bei diesen Druckmodulatoren arbeitet das Kugelsitzventil als Schaltventil, dessen Ventilkugel mittelbar über einen elektromagnetisch verstellbaren Druckentlastungskolben des Druckmodulators oder unmittelbar durch einen eigens dafür vorgesehenen Elektromagneten verschoben werden kann, um die Verbindung zwischen dem Geberzylinder und dem Radbremszylinder zu unterbrechen, so daß während des ABS-Betriebs der Bremsdruck im Radbremszylinder über den Druckentlastungskolben unabhängig vom Druck im Geberzylinder regelbar ist.

Zusammenfassend ist festzuhalten, daß die bekannten Hilfskraft- oder Fremdkraft-Bremsanlagen, bei denen die Servokraft über eine Hydraulikpumpe nach dem Staudruckprinzip erzeugt wird, im Hinblick auf eine vorrichtungstechnisch günstige Integration der Restbremsfunktion, eine befriedigende Rückmeldung des in den Zuspannorganen anstehenden Bremsdrucks an das Bremspedal sowie einen angemessenen Betätigungskraftbedarf am Bremspedal bei ausreichender Bremskraft an den Zuspannorganen verbesserungsbedürftig sind.

Gegenüber dem oben beschriebenen Stand der Technik liegt der Erfindung daher die Aufgabe zugrunde, eine Ventilanordnung für einen Fremdkraft-Bremskreis einer hydraulischen Bremsanlage zu schaffen, mittels der bei geringem vorrichtungstechnischen Aufwand sowohl im normalen Bremsbetrieb als auch bei Ausfall der Servokraft eine ausreichende Bremskraft an den Zuspannorganen bei gutem Pedalgefühl aufgebracht werden kann.

Diese Aufgabe wird durch die im Patentanspruch 1 angegebenen Merkmale gelöst. Vorteilhafte Weiterbildungen der Erfindung sind Gegenstand der Patentansprüche 2 bis 7.

Erfindungsgemäß hat die Ventilanordnung ein Drosselventil mit einem Ventilkörper, der einen im fremdkraftunterstützten Bremsbetrieb mit einem Druckmittel zwangsdurchströmten Drosselspalt ansteuerbar begrenzt, um einen definierten, einem Zuspannorgan der Bremsanlage anlegbaren Staudruck in einer Druckkammer einzustellen, in der ein Ventilkolben mit einer Durchgangsbohrung aufgenommen ist, der bei Ausfall der Fremdkraftunterstützung zur Erzeugung eines Restbremsdrucks in der Druckkammer über den Ventilkörper unter Verschluß der Durchgangsbohrung verschiebbar ist, wobei der Drosselspalt an der Durchgangsbohrung des Ventilkolbens ausgebildet ist.

Gemäß der Erfindung wird somit eine sehr kompakt bauende Ventilanordnung geschaffen, bei der der Ventilkörper nicht nur den Drosselspalt begrenzt, sondern bei Ausfall der Fremdkraftunterstützung auch als Verschlußelement für die Durchgangsbohrung im Ventilkolben und der direkten Ansteuerung des Ventilkolbens dient, während der in der Druckkammer jeweils anstehende Staudruck bzw. der durch den verschlossenen Ventilkolben erzeugte Bremsdruck unmittelbar, d.h. ohne Zwischenschaltung weiterer Bauelemente am Ventilkörper ansteht und somit gut an das Bremspedal zurückgemeldet werden kann. Dabei entstehen im fremdkraftunterstützten Bremsbetrieb durch kontinuierliche Durchströmung des geöffneten Drosselspalts insbesondere auch keine Regelungsdruckstöße, die an das Bremspedal weitergeleitet werden könnten.

Gemäß dem Patentanspruch 2 ist der Ventilkörper des Drosselventils der Ventilanordnung zur Einstellung des Drosselspalts hydraulisch und elektromagnetisch ansteuerbar, so daß sich leicht eine Antiblockierregelung (ABS) verwirklichen läßt, bei der der hydraulisch eingestellte Drosselspalt elektromagnetisch korrigiert wird, um einen den Bremsverhältnissen angepaßten Staudruck zu erzeugen, der dem Zuspannorgan als Bremsdruck anliegt.

Eine Ventilanordnung gemäß dem Patentanspruch 3, deren Drosselventil eine Ansteuerkammer aufweist, in der ein Ansteuerkolben gleitbeweglich geführt ist, mittels dem der Ventilkörper zur Einstellung des Drosselspalts zusätzlich mechanisch verschiebbar ist, eignet sich nicht zuletzt durch ihren kompakten Aufbau insbesondere für Integral-Bremsanlagen an Motorrädern, bei denen der Vorderrad-Bremskreis und der Hinterrad-Bremskreis prinzipiell getrennt hydraulisch ansteuerbar sind, über den Vorderrad-Bremskreis der Hinterrad-Bremskreis aber mit angesteuert werden soll.

Gemäß dem Patentanspruch 4 ist das Drosselventil der Ventilanordnung als Kugelsitzventil mit einem kugelförmigen Ventilkörper ausgebildet, der zusammen mit einem ringförmigen Dichtsitz an der Durchgangsbohrung des Ventilkolbens den Drosselspalt begrenzt. Neben der Tatsache, daß Kugelsitzventile relativ kostengünstig sind, läßt sich der Drosselquerschnitt auf vorteilhafte Weise über einen kugelförmigen Ventilkörper zur Erzeugung eines definierten Staudrucks zuverlässig und präzise einstellen. Auch eignet sich ein mit einem ringförmigen Dichtsitz zusammenwirkender kugelförmiger Ventilkörper hervorragend zur Abdichtung des Ventilkolbens, da sich der Ventilkörper am Dichtsitz selbst zentrieren kann.

Durch die im Patentanspruch 5 angegebenen Merkmale wird gewährleistet, daß bei einer Staudruckmodulierung am Drosselspalt der Ventilkörper alleine über die Kraft des umgewälzten Druckmittels vom Dichtsitz abgehoben werden kann, was die für die Staudruckmodulierung benötigten Betätigungskräfte vorteilhaft minimiert.

Bei einer Ventilanordnung mit den im Patentanspruch 6 angegebenen Merkmalen, wird bei geringem Aufwand und kleinen Betätigungskräften auch im ABS-Betrieb der Ventilanordnung zuverlässig gewährleistet, daß über die Steuerkammer keine ungewollte Rückwirkung der Regelung auf das Bremspedal erfolgt.

Schließlich ist gemäß dem Patentanspruch 7 vorgesehen, daß die Ventilanordnung um ein weiteres Drosselventil ergänzt wird, das in Strömungsrichtung des Druckmittels vor der Druckkammer des ersten Drosselventils angeordnet ist und dessen Drosselspalt unabhängig vom Drosselventil elektromagnetisch eingestellt werden kann, um einen definierten Staudruck zu erzeugen, der dem Zuspannorgan der Bremsanlage angelegt werden kann. Somit läßt sich auf einfache Weise eine Antriebsschlupfregelung (ASR) bzw. eine Fahrdynamikregelung in die hydraulische Bremsanlage mit integrieren.

Die Erfindung wird nachstehend anhand bevorzugter Ausführungsbeispiele unter Bezugnahme auf die Zeichnung näher erläutert, wobei gleiche oder ähnliche Teile mit gleichen Bezugszeichen versehen sind. Dabei zeigen:
Die Fig. 1 eine prinzipielle Darstellung eines ersten Ausführungsbeispiels der erfindungsgemäßen Ventilanordnung mit einem Drosselventil, dessen Ventilkörper hydraulisch sowie für eine Antiblockierregelung (ABS) elektromagnetisch angesteuert werden kann,
die Fig. 2 eine prinzipielle Darstellung eines zweiten Ausführungsbeispiels der erfindungsgemäßen Ventilanordnung, die gegenüber dem ersten Ausführungsbeispiel ein zusätzliches elektromagnetisch ansteuerbares Drosselventil für eine Antriebsschlupfregelung (ASR) bzw. eine Fahrdynamikregelung aufweist,
die Fig. 3 eine Schaltung von vier erfindungsgemäßen Ventilanordnungen in einer hydraulischen Fremdkraft-Bremsanlage für vierrädrige Kraftfahrzeuge, und
die Fig. 4 eine Schaltung von zwei erfindungsgemäßen Ventilanordnungen in einer hydraulischen Integral-Bremsanlage mit Antiblockierregelung (ABS) für Motorräder.

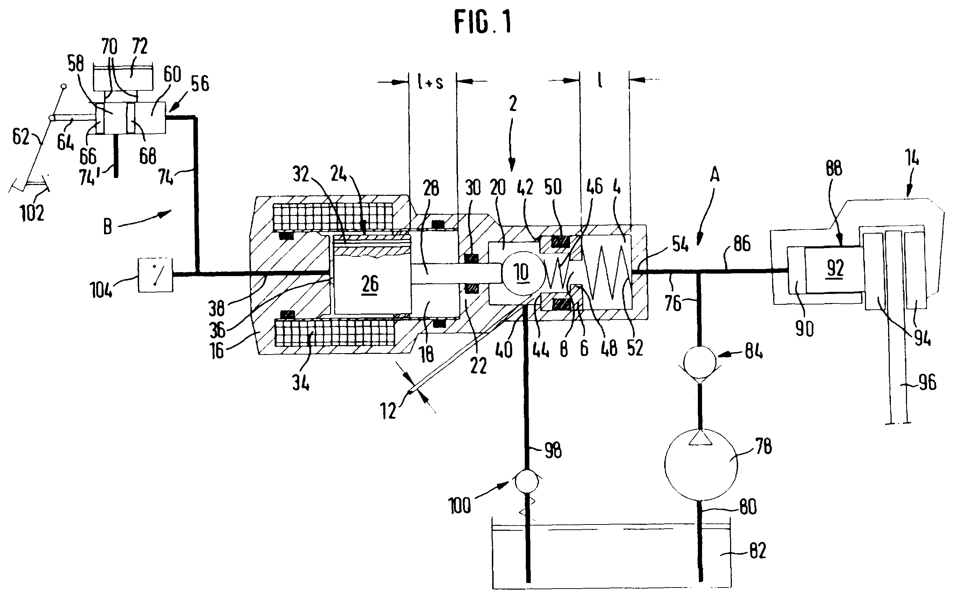

Die Fig. 1 zeigt die erfindungsgemäße Ventilanordnung im unbetätigten Zustand. Gemäß der Fig. 1 hat die Ventilanordnung ein Drosselventil 2, das eine Druckkammer 4 aufweist, in der ein Ventilkolben 6 gleitbeweglich angeordnet ist. Der Ventilkolben 6 hat eine Durchgangsbohrung 8, an der er zusammen mit einem Ventilkörper 10 einen Drosselspalt 12 ausbildet. Der Drosselspalt 12 wird im fremdkraftunterstützten Bremsbetrieb von einem Druckmittel, vorzugsweise Bremsflüssigkeit, zwangsdurchströmt und ist durch Ansteuern des Ventilkörpers 10 verstellbar, so daß in der Druckkammer 4 ein definierter Staudruck erzeugt wird. Der Staudruck ist zur Erzeugung einer Bremskraft an einen als Zuspannorgan dienenden Bremssattel 14 der Bremsanlage angelegt. Bei Ausfall der Fremdkraftunterstützung kann der Ventilkolben 6 über den Ventilkörper 10 in der Druckkammer 4 verschoben werden, wobei der Ventilkörper 10 die Durchgangsbohrung 8 verschließt, so daß in der Druckkammer 4 ein Restbremsdruck erzeugt wird.

Das Drosselventil 2 ist als 2/2 Kugelsitzventil ausgeführt und hat ein dreikammeriges Ventilgehäuse 16, das neben der Druckkammer 4 eine Steuerkammer 18 und eine Ablaufkammer 20 begrenzt, die über eine Wandung 22 des Ventilgehäuses 16 voneinander getrennt sind. In der Steuerkammer 18 ist ein Steuerkolben 24 gleitbeweglich angeordnet, der hydraulisch bzw. für eine Antiblockierregelung (ABS) elektromagnetisch angesteuert in axialer Richtung der Steuerkammer 18 verschiebbar ist. Dazu besteht der Steuerkolben 24 aus einem in der Steuerkammer 18 geführten Anker 26 und einem zentrisch zum Anker 26 angeordneten Ventilbolzen 28, der sich mittels einem Dichtelement 30 abgedichtet durch die Wandung 22 zwischen Steuerkammer 18 und Ablaufkammer 20 hindurcherstreckt und in die Ablaufkammer 20 hineinragt. Wie in der Fig. 1 deutlich zu erkennen ist, hat der in der Wandung 22 hydraulisch dicht geführte Ventilbolzen 28 des Steuerkolbens 24 einen kleineren Durchmesser als der Anker 26 des Steuerkolbens 24. Der Steuerkolben 24 kann in der Steuerkammer 18 im wesentlichen vollständig vom Druckmittel umspült werden, wozu im Anker 26 eine Bohrung 32 ausgebildet ist, die die in Fig. 1 linke Seite des Ankers 26 mit seiner in Fig. 1 rechten Seite verbindet.

In dem die Steuerkammer 18 radial umgebenden Abschnitt des Ventilgehäuses 16 ist eine Magnetspule 34 angeordnet, die den Anker 26 des Steuerkolbens 24 zumindest teilweise konzentrisch umgibt. Die Magnetspule 34 ist gegenüber der Steuerkammer 18 mittels einer in der Steuerkammer 18 eingelassenen Hülse und Dichtelementen (in Fig. 1 der Übersichtlichkeit halber nicht mit Bezugszeichen versehen) abgedichtet. Über den aus dem Anker 26 des Steuerkolbens 24 und der Magnetspule 34 bestehenden Magnetantrieb kann das Drosselventil 2 zur Veränderung des Drosselspalts 12 unabhängig von der Betätigung des Bremspedals 62 angesteuert werden, wobei der Steuerkolben 24 axial verschoben wird, wie im folgenden noch näher erläutert wird. Der Magnetantrieb ist dazu mit einer entsprechenden Strom-Kraft-Charakteristik ausgeführt.

Auf der der Ablaufkammer 20 gegenüberliegenden Seite des Ankers 26 ist in der Steuerkammer 18 oder am Anker 26 ein Anschlag 36 ausgebildet, der den Weg des Steuerkolbens 24 in der Steuerkammer 18 in Fig. 1 nach links begrenzt. Schließlich weist die Steuerkammer 18 einen Anschluß 38 auf, über den der Steuerkolben 24 hydraulisch angesteuert werden kann. Im dargestellten Fall mündet der Anschluß 38 auf der der Ablaufkammer 20 abgewandten Seite des Steuerkolbens 24 vorzugsweise zentrisch in der Steuerkammer 18. Da bei hydraulischer Ansteuerung des Drosselventils 2 der Steuerkolben 24 über die Bohrung 32 im Anker 26 im wesentlichen vollständig vom Druckmittel umspült ist, d.h. in der Steuerkammer 18 an jeder Stelle der gleiche Steuerdruck herrscht, könnte sich der Anschluß 38 auch radial durch das Ventilgehäuse 16 erstrecken und auf der der Ablaufkammer 20 zugewandten Seite des Steuerkolbens 24 in der Steuerkammer 18 münden.

In der Ablaufkammer 20 ist der Ventilkörper 10 angeordnet, der als metallische Kugel ausgebildet ist, die über den sich abgedichtet durch die Wandung 22 zwischen der Steuerkammer 18 und der Ablaufkammer 20 hindurcherstreckenden Ventilbolzen 28 mechanisch mit einer Kraft beaufschlagt werden kann. Der Ventilkörper 10 kann über den Ventilbolzen 28 des Steuerkolbens 24 nur mit einer Druckkraft beaufschlagt werden, da es sich bei dem Ventilkörper 10 und dem Ventilbolzen 28 um zwei separate Bauteile handelt. Die Ablaufkammer 20 ist ferner mit einem Anschluß 40 versehen, über den das Druckmittel aus der Ablaufkammer 20 abfließen kann.

Zwischen der Ablaufkammer 20 und der Druckkammer 4 des Drosselventils 2 ist ein Absatz 42 vorgesehen, der einen ablaufkammerseitigen Anschlag für den in der Druckkammer 4 aufgenommenen und auf einer Achse mit dem Steuerkolben 24 liegenden Ventilkolben 6 ausbildet. An der die Ablaufkammer 20 mit der Druckkammer 4 hydraulisch verbindenden Durchgangsbohrung 8 des Ventilkolbens 6 ist ablaufkammerseitig ein ringförmiger Dichtsitz 44 angebracht, der ebenso wie die Durchgangsbohrung 8 zentrisch zur Mittelachse des Ventilkolbens 6 ausgerichtet ist und zur Begrenzung des Drosselspalts 12 mit dem Ventilkörper 10 zusammenwirkt bzw. bei Ausfall der Fremdkraftunterstützung zur dichten Anlage mit dem Ventilkörper 10 kommt. In der Durchgangsbohrung 8 des Ventilkolbens 6 ist eine Rückstellfeder 46 aufgenommen, die sich an einer druckkammerseitigen Schulter 48 des Ventilkolbens 6 abstützt und den Ventilkörper 10 gegen den Ventilbolzen 28 des Steuerkolbens 24 drückt. Der Ventilkolben 6 ist an seinem Außenumfang mit einem Dichtelement 50 versehen, so daß lediglich der Drosselspalt 12 die Druckkammer 4 mit der Ablaufkammer 20 über die Durchgangsbohrung 8 des Ventilkolbens 6 hydraulisch verbindet bzw. bei Ausfall der Fremdkraftunterstützung in der Druckkammer 4 ein Restbremsdruck erzeugt werden kann, nachdem der Ventilkörper 10 die Durchgangsbohrung 8 im Ventilkolben 6 am Dichtsitz 44 verschlossen hat.

In der Druckkammer 4 ist eine Kolbenfeder 52 aufgenommen, die den Ventilkolben 6 auf den Absatz 42 des Ventilgehäuses 16 mit einer Kraft vorspannt, die größer ist als die Rückstellkraft der Rückstellfeder 46. Schließlich weist auch die Druckkammer 4 einen Anschluß 54 auf.

Aus der obigen Beschreibung wird deutlich, daß das Drosselventil 2 im nicht angesteuerten Zustand in Durchgangs-Null-Stellung geschaltet ist, in der der Ventilkolben 6 über die Kolbenfeder 52 gegen den Absatz 42 des Ventilgehäuses 16 vorgespannt ist, während die sich an der Schulter 48 des Ventilkolbens 6 abstützende Rückstellfeder 46 den Steuerkolben 24 über den Kraftschluß zwischen dem Ventilkörper 10 und dem Ventilbolzen 28 gegen den Anschlag 36 in der Steuerkammer 18 drückt, wobei der Drosselspalt 12 maximal geöffnet ist. Der mögliche Hub des Steuerkolbens 24 in der Steuerkammer 18 setzt sich zusammen aus dem Schließweg s des Drosselspalts 12, den der Ventilkörper 10 zurückzulegen hat, bis er von seiner vorgespannten Ausgangsstellung zur Anlage am Dichtsitz 44 des Ventilkolbens 6 gebracht wurde, und dem Hub 1 des Ventilkolbens 6, den dieser zurücklegen muß, bis er von seiner vorgespannten Ausgangsstellung zur Anlage mit dem Ventilgehäuse 16 an dem von der Ablaufkammer 20 abgewandten Ende der Druckkammer 4 gebracht wurde.

Die oben beschriebene Ventilanordnung ist wie folgt in die hydraulische Bremsanlage geschaltet.

Zur hydraulischen Ansteuerung des Drosselventils 2 über den in der Steuerkammer 18 geführten Steuerkolben 24 dient ein Geberzylinder 56, im dargestellten Fall ein Tandem-Hauptzylinder, der zwei Druckkammern 58, 60 aufweist und über ein Bremspedal 62 betätigt werden kann. Das Bremspedal 62 ist über eine Kolbenstange 64 mit einem ersten Kolben 66 des Geberzylinders 56 wirkverbunden, der die erste Druckkammer 58 des Geberzylinders 56 bremspedalseitig hydraulisch begrenzt. Zwischen der ersten Druckkammer 58 und der zweiten Druckkammer 60 des Geberzylinders 56 ist ein zweiter Kolben 68 angeordnet, der die erste und die zweite Druckkammer 58, 60 hydraulisch voneinander trennt. Die erste und die zweite Druckkammer 58, 60 sind jeweils über einen Anschluß 70 mit einem Ausgleichsbehälter 72 verbunden. Die zweite Druckkammer 60 des Geberzylinders 56 ist über eine Steuerleitung 74 hydraulisch an den Anschluß 38 der Steuerkammer 18 des Drosselventils 2 angeschlossen.

Die Druckkammer 4 des Drosselventils 2 ist an ihrem Anschluß 54 über eine Druckleitung 76 hydraulisch an den Ausgang einer Hydraulikpumpe 78 angeschlossen, deren Eingang über eine Ansaugleitung 80 mit einem Vorratsbehälter 82 für das Druckmittel verbunden ist und die im fremdkraftunterstützten Bremsbetrieb die Zwangsdurchströmung des Drosselspalts 12 bewirkt. In die Druckleitung 76 ist ein Rückschlagventil 84 geschaltet, das verhindert, daß das Druckmittel in Richtung auf die Hydraulikpumpe 78 zurückfließen kann. Von der Druckleitung 76 zweigt zwischen dem Rückschlagventil 84 und der Druckkammer 4 des Drosselventils 2 eine Druckleitung 86 ab, die zu dem Bremssattel 14 führt.

Der Bremssattel 14, im dargestellten Fall ein Schwimmsattel, hat eine Kolben-Zylinder-Anordnung 88 mit einer Druckkammer 90, in der ein Kolben 92 hydraulisch dicht geführt ist. Die Druckkammer 90 ist an die Druckleitung 86 angeschlossen, so daß der Kolben 92 mit dem mittels der Hydraulikpumpe 78 erzeugten und über das Drosselventil 2 gesteuerten Staudruck beaufschlagt werden kann. Ferner ist der Bremssattel 14 mit Bremsbelägen 94 versehen, die in an sich bekannter Weise bei Druckbeaufschlagung der Kolben-Zylinder-Anordnung 88 über den Kolben 92 gegen eine Bremsscheibe 96 gepreßt werden.

Die Ablaufkammer 20 des Drosselventils 2 ist über eine Rücklaufleitung 98 mit dem Vorratsbehälter 82 verbunden. In die Rücklaufleitung 98 ist wahlweise und abhängig von der räumlichen Anordnung des Vorratsbehälters 82 ein Druckhalteventil 100 geschaltet, das in Richtung auf die Ablaufkammer 20 vorgespannt ist.

Schließlich ist ein über das Bremspedal 62 mechanisch betätigbarer Pedalschalter 102 und/oder ein in die Steuerleitung 74 geschalteter elektro-hydraulischer Druckschalter 104 vorgesehen, deren Funktion im folgenden noch erläutert wird.

Im Ergebnis bilden die Hydraulikpumpe 78, die Druckleitung 76, das über die Rücklaufleitung 98 an den Vorratsbehälter 82 angeschlossene Drosselventil 2, die Druckleitung 86 und die Kolben-Zylinder-Anordnung 88 des Bremssattels 14 einen Fremdkraft-Bremskreis A mit über den verschließbaren Ventilkolben 6 integrierter Restbremsfunktion aus, der mittels der Magnetspule 34 elektromagnetisch oder über einen vom Fremdkraft-Bremskreis A hydraulisch getrennten hydraulischen Steuerkreis B angesteuert werden kann, welcher aus dem Kolben 68 des Geberzylinders 56, der zweiten Druckkammer 60 des Geberzylinders 56, der Steuerleitung 74, der Steuerkammer 18 des Drosselventils 2 und dem Steuerkolben 24 des Drosselventils 2 besteht.

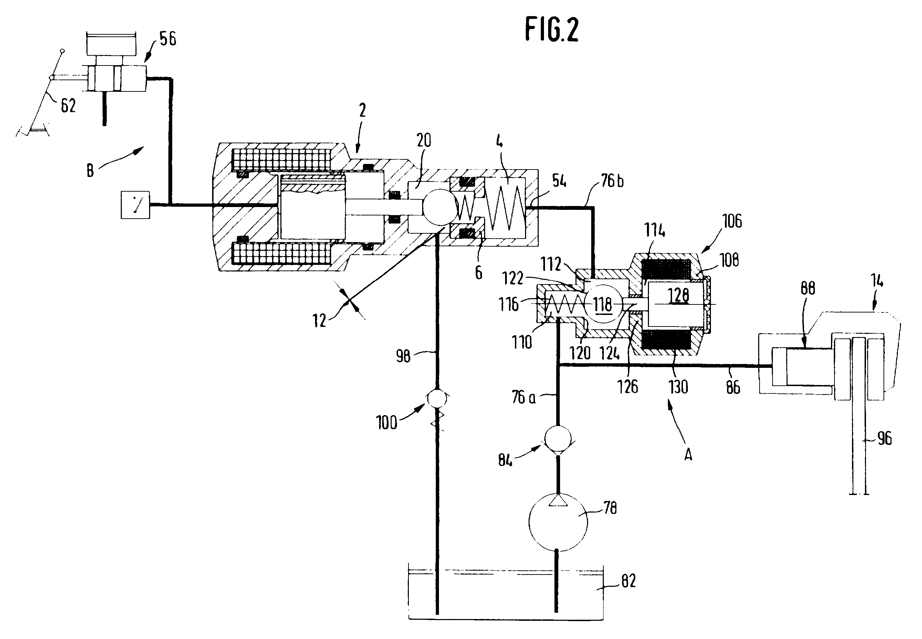

An dieser Stelle bleibt anzumerken, daß in Fig. 1 der Einfachheit halber lediglich eine erfindungsgemäße Ventilanordnung zur Ansteuerung der Kolben-Zylinder-Anordnung 88 des Bremssattels 14 für ein Rad des Kraftfahrzeugs dargestellt ist. Die Ansteuerung der Kolben-Zylinder-Anordnungen weiterer Bremssättel für die weiteren Räder des Kraftfahrzeugs kann entsprechend über weitere erfindungsgemäße Ventilanordnungen erfolgen, die über einen Abzweig (nicht dargestellt) der Steuerleitung 74 an die zweite Druckkammer 60 des Geberzylinders 56 bzw. über eine Steuerleitung 74' an die erste Druckkammer 58 des Geberzylinders 56 angeschlossen sind, wie im folgenden noch näher erläutert wird. Die hydraulische Ansteuerung der erfindungsgemäßen Ventilanordnung kann natürlich auch mittels eines einkammerigen Geberzylinders erfolgen. Entsprechendes gilt auch für das in der Fig. 2 dargestellte zweite Ausführungsbeispiel der Erfindung.

Im folgenden wird die Funktionsweise des ersten Ausführungsbeispiels der erfindungsgemäßen Ventilanordnung beschrieben.

Durch Niederdrücken des Bremspedals 62 werden die Kolben 66, 68 des Geberzylinders 56 in den Druckkammern 58, 60 in Fig. 1 nach rechts verschoben und verschließen die Anschlüsse 70 zum Ausgleichsbehälter 72, so daß sich in den Druckkammern 58, 60 ein Druck einstellt, der zu der auf das Bremspedal 62 wirkenden Betätigungskraft proportional ist. Dieser Druck steht auch im hydraulischen Steuerkreis B für den Fremdkraft-Bremskreis A über die Steuerleitung 74 in der Steuerkammer 18 des Drosselventils 2 als Steuerdruck an.

Der in der Steuerkammer 18 des Drosselventils 2 anliegende Steuerdruck verschiebt nun den Steuerkolben 24 infolge der Druckbeaufschlagung der der Querschnittsfläche des Ventilbolzens 28 entsprechenden hydraulischen Wirkfläche des Steuerkolbens 24 in Fig. 1 nach rechts und damit den am Steuerkolben 24 durch die Kraft der Rückstellfeder 46 anliegenden Ventilkörper 10 in Richtung auf den Dichtsitz 44 an der Durchgangsbohrung 8 des Ventilkolbens 6. Diese hydraulische Ansteuerung des Drosselventils 2 über den hydraulischen Steuerkreis B ist sowohl im fremdkraftunterstützten Bremsbetrieb als auch bei Ausfall der Fremdkraftunterstützung dieselbe.

Im fremdkraftunterstützten Bremsbetrieb wird gleichzeitig die Hydraulikpumpe 78 über den durch das Bremspedal 62 betätigten Pedalschalter 102 bzw. mit Überschreiten eines vorbestimmten Signaldrucks im hydraulischen Steuerkreis B über den elektro-hydraulischen Druckschalter 104 gestartet, wozu der Pedalschalter 102 bzw. der elektro-hydraulische Druckschalter 104 ein elektrisches Signal liefert, das einen mit der Hydraulikpumpe 78 antriebsverbundenen Elektromotor (nicht dargestellt) startet oder eine elektromagnetische Kupplung (nicht dargestellt) einkuppelt, die die Hydraulikpumpe 78 mit einer drehenden Welle des Motors oder eines Rads des Kraftfahrzeugs verbindet. Ebenso könnte die Hydraulikpumpe 78 aber auch während der gesamten Gebrauchsdauer des Kraftfahrzeugs betrieben werden.

Die Hydraulikpumpe 78 saugt nun über die Ansaugleitung 80 das Druckmittel aus dem Vorratsbehälter 82 an und fördert es über das Rückschlagventil 84 und die Druckleitung 76 in die Druckkammer 4 des Drosselventils 2. Von der Druckkammer 4 fließt das Druckmittel über die Durchgangsbohrung 8 im Ventilkolben 6 durch den Drosselspalt 12 in die Ablaufkammer 20 und von da über die Rücklaufleitung 98 sowie das Druckhalteventil 100 zurück in den Vorratsbehälter 82. Da zu Beginn der Betätigung des Bremspedals 62 der Steuerkolben 24 des Drosselventils 2 und somit der Ventilkörper 10 nur geringfügig in Richtung auf den Dichtsitz 44 am Ventilkolben 6 verschoben sind, so daß der Drosselspalt 12 fast vollständig geöffnet ist, wälzt die Hydraulikpumpe 78 das Druckmittel weitgehend drucklos über das Drosselventil 2 um.

Der Ventilkörper 10 wird nun über den Ventilbolzen 28 des hydraulisch beaufschlagten Steuerkolbens 24 entgegen der Kraft der Rückstellfeder 46 weiter in Richtung des Dichtsitzes 44 geschoben, und zwar mit einer Kraft, die gleich dem Produkt des in der Steuerkammer 18 durch den Geberzylinder 56 aufgebrachten Steuerdrucks und der durch die Querschnittsfläche des Ventilbolzens 28 bestimmten hydraulischen Wirkfläche des Steuerkolbens 24 ist. Bei Annäherung des Ventilkörpers 10 an den Dichtsitz 44 verringert sich der Drosselspalt 12, wodurch sich der Durchflußquerschnitt für das durch die Hydraulikpumpe 78 über die Druckleitung 76 und die Druckkammer 4 umgewälzte Druckmittel verringert. Im Ergebnis wird im Fremdkraft-Bremskreis A in Umlaufrichtung des Druckmittels vor dem Drosselspalt 12 ein Staudruck erzeugt, der sich über die Druckkammer 4, die Druckleitung 76 und die Druckleitung 86 bis zur Druckkammer 90 der Kolben-Zylinder-Anordnung 88 des Bremssattels 14 fortpflanzt, so daß über den Kolben 92 der Kolben-Zylinder-Anordnung 88 und die Bremsbeläge 94 eine Bremskraft an der Bremsscheibe 96 aufgebracht wird.

Der vor dem Drosselspalt 12 erzeugte Staudruck hängt im wesentlichen vom Volumenstrom der Hydraulikpumpe 78 und dem Durchflußwiderstand des Drosselventils 2 ab, ist aber in guter Näherung proportional zu dem in der Steuerkammer 18 des Drosselventils 2 anstehenden Steuerdruck. Der Proportionalitätsfaktor zwischen diesem Steuerdruck und dem vor dem Drosselspalt 12 erzeugten Staudruck ist bestimmt durch das Verhältnis der hydraulischen Wirkfläche des Steuerkolbens 24 in der Steuerkammer 18, d.h. der Querschnittsfläche des Ventilbolzens 28, zur effektiven hydraulischen Wirkfläche des Ventilkörpers 10 bei Anlage am Dichtsitz 44. Durch entsprechende Dimensionierung dieser Wirkflächen läßt sich einerseits die gewünschte Druckverstärkung im Fremdkraft-Bremskreis A einstellen. Andererseits kann die über die effektive hydraulische Wirkfläche des Ventilkörpers 10 durch den Staudruck am Ventilkörper 10 aufgebrachte Reaktionskraft derart eingestellt werden, daß über die Drucksäule des hydraulischen Steuerkreises B zwischen dem Steuerkolben 24 des Drosselventils 2 und dem zweiten Kolben 68 des Geberzylinders 56 sowie die abgeschlossene Drucksäule zwischen dem zweiten Kolben 68 und dem ersten Kolben 66 des Geberzylinders 56 eine angemessene Rückmeldung des Staudrucks zum Bremspedal 62 hin erfolgt, um ein gutes Pedalgefühl zu gewährleisten und somit eine gefühlvolle Betätigung des Bremspedals 62 zu ermöglichen. Da der Drosselspalt 12 des Drosselventils 2 kontinuierlich verstellt und im fremdkraftunterstützten Bremsbetrieb gegen den Staudruck nicht vollständig geschlossen wird, entstehen insbesondere auch keine Regelungsdruckstöße, die auf das Bremspedal 62 zurückwirken könnten.

Es bleibt anzumerken, daß bei Erzeugung des Staudrucks durch die Hydraulikpumpe 78 in der Druckkammer 4 des Drosselventils 2 der Ventilkolben 6 immer auf Anschlag an dem Absatz 42 verharrt, da die druckkammerseitigen hydraulischen Wirkflächen des Ventilkolbens 6, die durch den Staudruck beaufschlagt werden, größer sind als die ablaufkammerseitigen hydraulischen Wirkflächen des Ventilkolbens 6, von denen zudem ein Teil nur durch den niedrigeren Druck in der Ablaufkammer 20 beaufschlagt wird, so daß eine resultierende Kraft zur Ablaufkammer 20 hin verbleibt, die sich der Federkraft der Kolbenfeder 52 überlagert.

Soll im fremdkraftunterstützten Bremsbetrieb der Bremsdruck nun reduziert werden, so wird durch Entlasten des Bremspedals 62 der Steuerdruck im hydraulischen Steuerkreis B verringert und der Steuerkolben 24 des Drosselventils 2 fährt zusammen mit dem Ventilkörper 10 unter Vergrößerung des Drosselspalts 12 in seine Ausgangsstellung zurück, wobei er gegen den abbauenden Steuerdruck in der Steuerkammer 18 über den Ventilkörper 10 durch den mit Vergrößerung des Drosselspalts 12 kleiner werdenden Staudruck des umlaufenden Druckmittels in der Druckkammer 4 und die Kraft der Rückstellfeder 46 belastet wird. Durch Rückfall des vom Bremspedal 62 betätigten Pedalschalters 102 in die unbetätigte Stellung bzw. mit Unterschreitung des vorbestimmten Signaldrucks im hydraulischen Steuerkreis B am elektro-hydraulischen Druckschalter 104 wird gegebenenfalls die Hydraulikpumpe 78 bzw. deren Antrieb abgeschaltet, so daß der Umlauf des Druckmittels beendet wird und der Bremsdruck auf Null abfällt.

Fällt die Fremdkraftunterstützung durch beispielsweise einen Ausfall der Hydraulikpumpe 78 oder Leckagen im Fremdkraft-Bremskreis A aus, so kann die erforderliche Restbremskraft mit angemessener Rückmeldung an das Bremspedal 62 über den Ventilkolben 6 aufgebracht werden. Dabei verschließt der über den hydraulisch beaufschlagten Steuerkolben 24 gegen die Kraft der Rückstellfeder 46 um den Schließweg s des Drosselspalts 12 verschobene Ventilkörper 10 die Durchgangsbohrung 8 im Ventilkolben 6 am Dichtsitz 44 hydraulisch dicht, so daß durch weiteres Verschieben des verschlossenen Ventilkolbens 6 über den Ventilkörper 10 und den Steuerkolben 24 in der Druckkammer 4 ein Restbremsdruck erzeugt wird. Der Restbremsdruck pflanzt sich über die Druckleitung 86 zur Kolben-Zylinder-Anordnung 88 des Bremssattels 14 fort, so daß über den Kolben 92 und die Bremsbeläge 94 an der Bremsscheibe 96 eine Restbremskraft aufgebracht wird. Der zur Aufbringung des Restbremsdrucks maximal mögliche Nutzhub der Ventilanordnung ist gleich dem Hub 1 des Ventilkolbens 6. Bei Ausfall der Fremdkraftunterstützung ist es zur Aufbringung des Restbremsdrucks in der Druckkammer 4 insbesondere von Vorteil, daß der Ventilkörper 10 eine Kugel ist, da sich der Ventilkörper 10 am ringförmigen Dichtsitz 44 des Ventilkolbens 6 selbst zentrieren kann und somit die Durchgangsbohrung 8 gegenüber der Ablaufkammer 20 zuverlässig abdichtet.

Bei einer Antiblockierregelung (ABS) arbeitet die Ventilanordnung gemäß Fig. 1 wie folgt.

Die Antiblockierregelung bewirkt prinzipiell, daß, wenn während eines Bremsvorgangs mit anstehendem Bremsdruck eine bestimmte Verzögerungsschwelle an einem gebremsten Rad überschritten wird, der Radbremsdruck soweit verringert wird, bis eine zweite Verzögerungsschwelle an diesem Rad unterschritten wird. Hierfür kann es notwendig sein, den anstehenden Radbremsdruck bis auf Null abzubauen. Danach wird der Radbremsdruck wieder erhöht, bis entweder das Rad erneut überbremst oder der vom Fahrer vorgegebene Bremsdruck erreicht wird. Dies wird dadurch erreicht, daß der Steuerkolben 24 über den Anker 26 und die Magnetspule 34 zusätzlich elektromagnetisch ansteuerbar ist.

Wird im ABS-Betrieb der hydraulischen Bremsanlage eine Bremsung über das Bremspedal 62 eingeleitet, erkennt eine Sensorik (nicht dargestellt), wenn der über den Fremdkraft-Bremskreis A im Bremssattel 14 anliegende Radbremsdruck das Rad (nicht dargestellt) überbremst. Der Bremsdruck wird nun durch Ansteuerung des aus Anker 26 und Magnetspule 34 bestehenden Magnetantriebs geeignet eingestellt. Hierbei wirkt die magnetische Kraft auf den Anker 26 in Fig. 1 nach links und damit entgegen der Kraft, die dem Produkt aus der Querschnittsfläche des Ventilbolzens 28 und dem in der Steuerkammer 18 anstehenden Steuerdruck entspricht. Damit wird die resultierende Kraft, die über den Ventilbolzen 28 auf den Ventilkörper 10 in Fig. 1 nach rechts wirkt, verringert. Im Extremfall kann diese resultierende Kraft zu Null gemacht werden, indem die magnetische Kraft durch eine stufenlos regelbare Bestromung der Magnetspule 34 so groß gemacht wird, daß sie die durch den hydraulischen Steuerdruck aufgebrachte Kraft am Steuerkolben 24 kompensiert. In Folge wird der durch die Rückstellfeder 46 und den anstehenden Staudruck belastete Ventilkörper 10 in Fig. 1 nach links in Richtung vom Dichtsitz 44 weg gedrückt und der Drosselspalt 12 vergrößert. Im Ergebnis wird der in der Druckkammer 90 der Kolben-Zylinder-Anordnung 88 über die Druckleitung 86 anstehende Staudruck verringert, bis die Verzögerungsschwelle unterschritten wird.

Danach wird die elektromagnetische Ansteuerung des Drosselventils 2 verringert, so daß die resultierende Kraft, die über den Ventilbolzen 28 auf den Ventilkörper 10 in Fig. 1 nach rechts wirkt, wieder ansteigt. In Folge wird der Ventilkörper 10 in Fig. 1 nach rechts in Richtung zum Dichtsitz 44 hin gedrückt und der Drosselspalt 12 verringert. Dadurch wird der in der Druckkammer 90 der Kolben-Zylinder-Anordnung 88 über die Druckleitung 86 anstehende Staudruck wieder erhöht, bis entweder das Rad wieder überbremst wird oder der Drosselspalt 12 wie oben beschrieben allein wieder nur über den hydraulischen Steuerkreis B eingestellt wird und im Bremssattel 14 durch den Fremdkraft-Bremskreis A eine der Betätigungskraft proportionale Bremskraft aufgebracht wird. Es stellt sich ein Regelvorgang ein, der während der antiblockiergeregelten Bremsung andauert.

Dieser Regelvorgang erfolgt ohne wesentliche Änderung des Steuerdrucks in der Steuerkammer 18 des hydraulischen Steuerkreises B, da die durch die Bewegung des Steuerkolbens 24 hervorgerufene Volumenänderung des Mediums in der Steuerkammer 18 aufgrund des geringen Hubs s im wesentlichen durch elastische Verformung von vorhandenen Dichtelementen aufgenommen wird.

Als besonders vorteilhaft ist bei der oben beschriebenen Ausführung der Ventilanordnung somit zu vermerken, daß bei der Antiblockierregelung keine unerwünschten Druckpulsationen im hydraulischen Steuerkreis B entstehen, die als Regelungsdruckstöße auf das Bremspedal 62 zurückwirken könnten, so daß auch im ABS-Betrieb der hydraulischen Bremsanlage ein gutes Pedalgefühl gewährleistet ist.

Die Reduzierung des Bremsdrucks im ABS-Betrieb erfolgt in der Ventilanordnung auf die gleiche Weise wie bei dem fremdkraftunterstützten Bremsbetrieb ohne weitere Regelung, so daß an dieser Stelle auf die obigen Ausführungen verwiesen werden kann.

Gemäß dem in Fig. 2 dargestellten zweiten Ausführungsbeispiel der Erfindung ist die Ventilanordnung nach Fig. 1 mit einem zusätzlichen elektromagnetisch ansteuerbaren Drosselventil 106 versehen, so daß eine Antriebsschlupfregelung (ASR) bzw. eine Fahrdynamikregelung durchgeführt werden kann. Den Teilen in der Fig. 1 entsprechende Teile sind mit den gleichen Bezugszeichen versehen und werden im folgenden nicht nochmals erläutert. Die Fig. 2 zeigt die um das Drosselventil 106 ergänzte Ventilanordnung im unbetätigten Zustand, wobei der Drosselspalt 12 des Drosselventils 2 tatsächlich maximal geöffnet ist.

Eine Antriebsschlupfregelung bewirkt prinzipiell, daß, wenn beispielsweise beim Anfahren eines Kraftfahrzeugs die Reibbeiwerte eines angetriebenen Rads zum Untergrund zu gering sind, also eine Beschleunigungsschwelle überschritten wird, dieses Rad solange angebremst wird, bis eine zweite Beschleunigungsschwelle unterschritten wird, so daß sich das Rad wieder in einem zulässigen Schlupfbereich bewegt. Bei einer Fahrdynamikregelung hingegen, die prinzipiell auf die Erhaltung der Längsstabilität des Kraftfahrzeugs, meßbar über den Gierwinkel zwischen der Längsachse des Kraftfahrzeugs und der momentanen Fahrtrichtung, abstellt, werden in kritischen Fahrzuständen, wie beispielsweise Untersteuern, Übersteuern oder Bremsen während schneller Kurvenfahrt, die auftretenden Giermomente, die zu einem Ausbrechen oder Schleudern des Kraftfahrzeugs führen können, u.a. durch Anbremsen eines oder mehrerer Räder korrigiert.

Für eine derartige Regelung muß somit die Modulation des Bremsdrucks an einzelnen Rädern möglich sein. Dies wird mit Hilfe des vorstehend beschriebenen Drosselventils 2 und dem zusätzlichen Drosselventil 106 gewährleistet, die für jedes Rad vorgesehen sind.

Ebenso wie das Drosselventil 2 weist das zusätzliche Drosselventil 106 ein dreikammeriges Ventilgehäuse 108 auf, das eine Druckkammer 110, eine Ablaufkammer 112 und eine Steuerkammer 114 begrenzt. In der Druckkammer 110 ist eine Rückstellfeder 116 für den in der Ablaufkammer 112 angeordneten kugelförmigen Ventilkörper 118 vorgesehen, der mit einem am Ventilgehäuse 108 angebrachten ringförmigen Dichtsitz 120 zur Ausbildung eines Drosselspalts 122 zusammenwirkt. Der Ventilkörper 118 wird von der Rückstellfeder 116 gegen einen Ventilbolzen 124 gedrückt, der sich durch eine Wandung 126 zwischen der Ablaufkammer 112 und der Steuerkammer 114 abgedichtet hindurcherstreckt. In der Steuerkammer 114 ist der Ventilbolzen 124 mit einem Anker 128 verbunden, der über eine Magnetspule 130 axial definiert verschoben werden kann, um entgegen der Kraft der Rückstellfeder 116 über den Ventilbolzen 124 und den Ventilkörper 118 den Drosselspalt 122 einzustellen. Dazu ist der aus Anker 128 und Magnetspule 130 bestehende Magnetantrieb als Proportionalmagnet mit einer entsprechenden Strom-Kraft-Charakteristik ausgeführt. Über den Magnetantrieb kann der Ventilkörper 118 somit kraftabhängig steuerbar verschoben werden, wobei sich der Drosselspalt 122 des Drosselventils 106 bei Strombeaufschlagung des Magnetantriebs bzw. Krafterhöhung verkleinert und bei Wegnahme des Stroms durch die Kraft der Rückstellfeder 116 und den in der Druckkammer 110 herrschenden Druck, der auf den Ventilkörper 118 wirkt, vergrößert.

Das zusätzliche Drosselventil 106 unterscheidet sich von dem Drosselventil 2 im wesentlichen dadurch, daß kein Ventilkolben vorgesehen ist und der Drosselspalt 122 über den Magnetantrieb alleine elektromagnetisch einstellbar ist. Dementsprechend muß der Anker 128 in der Steuerkammer 114 auch nur einen Hub aufweisen, der dem Schließweg des Drosselspalts 122 entspricht.

Das zusätzliche Drosselventil 106 ist im Fremdkraft-Bremskreis A von der Hydraulikpumpe 78 ausgehend hinter dem Abzweig der Druckleitung 86 von der Druckleitung 76 in die Druckleitung 76 geschaltet und trennt die Druckleitung 76 in zwei Druckleitungsabschnitte 76a und 76b auf. Der erste Druckleitungsabschnitt 76a verbindet die Druckkammer 110 des zusätzlichen Drosselventils 106 über das Rückschlagventil 84 mit der Hydraulikpumpe 78, während der zweite Druckleitungsabschnitt 76b die Ablaufkammer 112 des zusätzlichen Drosselventils 106 über den Anschluß 54 des Drosselventils 2 mit der Druckkammer 4 des Drosselventils 2 verbindet.

Über die in Fig. 2 dargestellte Ventilanordnung ist es möglich, mit entsprechender Sensorik bereits eingeleiteten Über- oder Falschreaktionen des Fahrers beim Führen des Kraftfahrzeugs selbsttätig entgegenzuwirken, bevor der Fahrer den kritischen Zustand des Kraftfahrzeugs wahrgenommen hat und das Bremspedal 62 betätigt. Dabei wird das zusätzliche Drosselventil 106 unabhängig vom Drosselventil 2 über den aus Anker 128 und Magnetspule 130 bestehenden Magnetantrieb angesteuert, wodurch der Drosselspalt 122 definiert verkleinert wird. Gleichzeitig wird die Hydraulikpumpe 78 von der Sensorik in Gang gesetzt, sofern sie nicht bereits läuft. An dem somit vom Druckmittel zwangsdurchströmten Drosselspalt 122 des zusätzlichen Drosselventils 106 entsteht ein Staudruck, der sich über die Druckkammer 110 des zusätzlichen Drosselventils 106, den Druckleitungsabschnitt 76a und die Druckleitung 86 zur Kolben-Zylinder-Anordnung 88 des Bremssattels 14 fortpflanzt, so daß an der Bremsscheibe 96 eine definierte Bremskraft unabhängig vom Drosselventil 2 aufgebracht wird. Das Druckmittel wird von der Ablaufkammer 112 des zusätzlichen Drosselventils 106 über den Druckleitungsabschnitt 76b, die Druckkammer 4 des Drosselventils 2, den geöffneten Drosselspalt 12 des Drosselventils 2, die Ablaufkammer 20 des Drosselventils 2, die Rücklaufleitung 98 sowie das Druckhalteventil 100 zurück in den Vorratsbehälter 82 gefördert. Auch diese Regelung erfolgt vorteilhaft rückwirkungsfrei, d.h. die Regelvorgänge sind am Bremspedal 62 nicht zu verspüren.

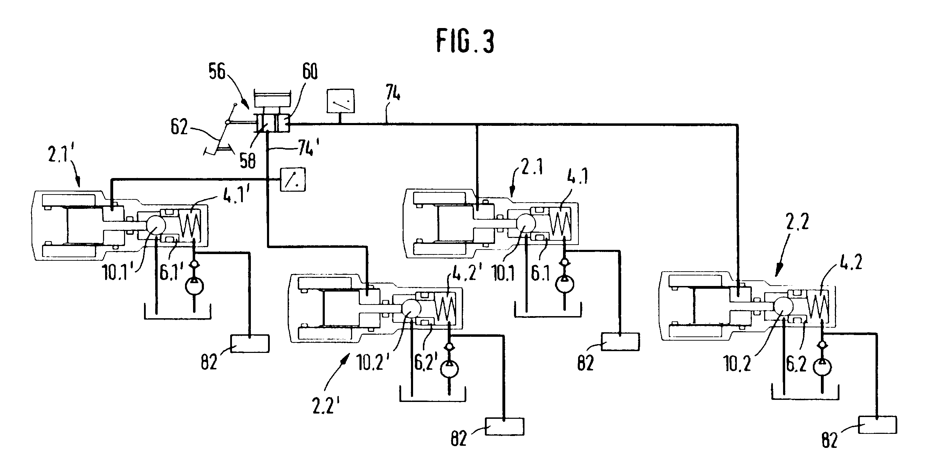

Die Fig. 3 zeigt eine mögliche Schaltung von vier erfindungsgemäßen Ventilanordnungen mit jeweils einem hinsichtlich Aufbau und Funktion dem unter Bezugnahme auf die Fig. 1 beschriebenen Drosselventil 2 entsprechenden Drosselventil 2.1, 2.2, 2.1', 2.2' in einer hydraulischen Fremdkraft-Bremsanlage für vierrädrige Kraftfahrzeuge. Den Teilen in der Fig. 1 entsprechende Teile sind mit den gleichen Bezugszeichen versehen und werden nicht nochmals erläutert. Die Fig. 3 zeigt die hydraulische Fremdkraft-Bremsanlage im unbetätigten Zustand, wobei die Drosselspalte der Drosselventile 2.1, 2.2, 2.1', 2.2' tatsächlich maximal geöffnet sind.

Gemäß dieser Schaltung sind zwei Ventilanordnungen mit den Drosselventilen 2.1 und 2.2 parallel in die Steuerleitung 74 geschaltet, die an die zweite Druckkammer 60 des Geberzylinders 56 angeschlossen ist, während zwei Ventilanordnungen mit den Drosselventilen 2.1' und 2.2' parallel in die Steuerleitung 74' geschaltet sind, die an die erste Druckkammer 58 des Geberzylinders 56 angeschlossen ist, so daß durch Betätigen des Bremspedals 62 die Drosselventile 2.1, 2.2, 2.1', 2.2' wie unter Bezugnahme auf die Fig. 1 beschrieben angesteuert werden können. An jede der Druckkammern 4.1, 4.2, 4.1', 4.2' der Drosselventile 2.1, 2.2, 2.1', 2.2' ist im übrigen jeweils ein Bremssattel (nicht dargestellt) angeschlossen.

Der fremdkraftunterstützte Bremsbetrieb, die Erzeugung des Restbremsdrucks bei Ausfall der Fremdkraftunterstützung über die Ventilkolben 6.1, 6.2, 6.1', 6.2' sowie die Antiblockierregelung (ABS) erfolgen wie unter Bezugnahme auf die Fig. 1 beschrieben. Die vier Ventilanordnungen können jeweils durch ein zusätzliches Drosselventil (nicht dargestellt) ergänzt werden, so daß eine Antriebsschlupfregelung (ASR) und/oder eine Fahrdynamikregelung entsprechend den unter Bezugnahme auf die Fig. 2 gemachten Ausführungen durchgeführt werden kann.

Durch den kompakten Aufbau der erfindungsgemäßen Ventilanordnung eignet sich diese insbesondere auch für den Einsatz an Motorrädern, wobei üblicherweise anstelle des zweikammerigen Geberzylinders ein einkammeriger Geberzylinder zur Ansteuerung der Vorderradbremse und ein einkammeriger Geberzylinder zur Ansteuerung der Hinterradbremse vorgesehen ist. Diese einkammerigen Geberzylinder steuern dann jeweils eine erfindungsgemäße Ventilanordnung gemäß Fig. 1 oder Fig. 2 an, so daß ein fremdkraftunterstützter Bremsbetrieb, die Erzeugung eines Restbremsdrucks bei Ausfall der Fremdkraftunterstützung, eine Antiblockierregelung (ABS) bzw. eine Antriebsschlupfregelung (ASR) analog den obigen Ausführungen durchgeführt werden kann. Eine Fahrdynamikregelung läßt sich bei Motorrädern aufgrund fehlender Einflußnahmemöglichkeit auf die Giermomente über die Bremsanlage nicht realisieren.

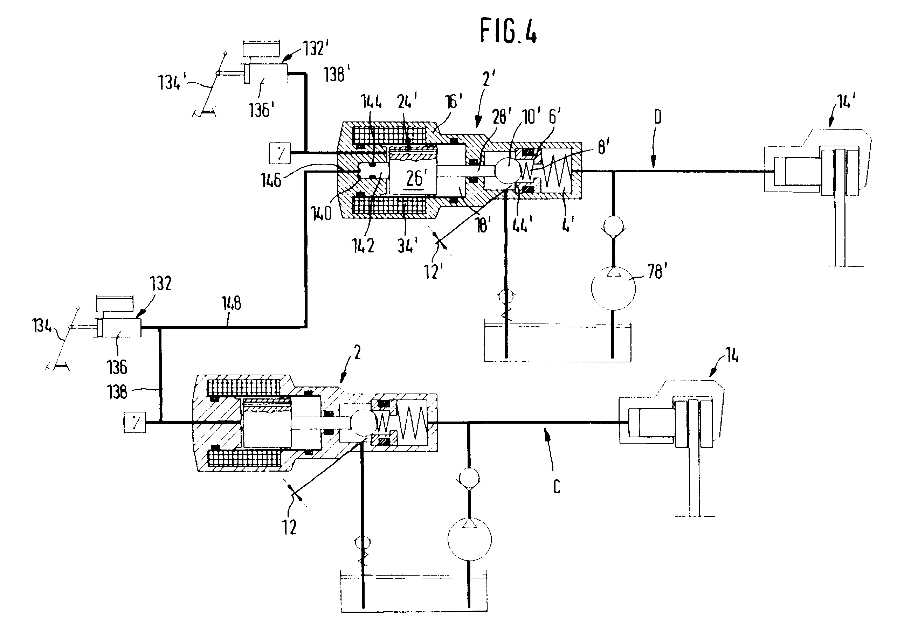

Die Fig. 4 zeigt eine Schaltung von zwei erfindungsgemäßen Ventilanordnungen in einer hydraulischen Integral-Bremsanlage mit Antiblockierregelung für Motorräder. Den Teilen in der Fig. 1 entsprechende Teile sind mit den gleichen Bezugszeichen versehen und werden im folgenden nicht nochmals erläutert. Die Fig. 4 zeigt die hydraulische Integral-Bremsanlage im unbetätigten Zustand, wobei die Drosselspalte 12, 12' der Drosselventile 2, 2' tatsächlich maximal geöffnet sind.

An Motorrädern werden üblicherweise, wie an vierrädrigen Kraftfahrzeugen auch, zwei getrennte Bremskreise für Vorder- und Hinterrad vorgesehen. Dabei werden jeweils einkammerige bzw. einkreisige Geberzylinder für die Ansteuerung des Vorderrad- bzw. des Hinterrad-Bremskreises verwendet. Aufgrund der ungleichen Bremsverteilung bei Motorrädern im allgemeinen wird ein Großteil der erforderlichen Bremskraft über das Vorderrad aufgebracht, was zur Folge hat, daß in der Praxis das Bremsen mittels dem Hinterrad-Bremskreis vernachlässigt wird und die am Hinterrad aufbringbare Bremskraft für einen optimalen Bremsvorgang weitgehend ungenutzt bleibt. Hier schaffen hydraulische Integral-Bremsanlagen Abhilfe, bei denen der eine Bremskreis über den anderen Bremskreis mit angesteuert wird.

Gemäß Fig. 4 hat der Vorderrad-Bremskreis C einen einkammerigen Geberzylinder 132, der über einen Bremshebel 134 betätigt werden kann und der eine Druckkammer 136 aufweist. An die Druckkammer 136 ist über eine Steuerleitung 138 eine erfindungsgemäße Ventilanordnung mit dem Drosselventil 2 angeschlossen, die wie unter Bezugnahme auf die Fig. 1 beschrieben aufgebaut ist und arbeitet. Gleichermaßen hat der Hinterrad-Bremskreis D einen einkammerigen Geberzylinder 132', der über einen Bremshebel 134' betätigt werden kann und der eine Druckkammer 136' aufweist. An die Druckkammer 136' ist über eine Steuerleitung 138' ebenfalls eine erfindungsgemäße Ventilanordnung mit dem Drosselventil 2' angeschlossen, die im wesentlichen wie unter Bezugnahme auf die Fig. 1 beschrieben aufgebaut ist und arbeitet.

Das Drosselventil 2' unterscheidet sich von dem in Fig. 1 dargestellten Drosselventil 2 lediglich dadurch, daß am steuerkammerseitigen Ende des Ventilgehäuses 16' eine zusätzliche Ansteuerkammer 140 vorgesehen ist, in der ein Ansteuerkolben 142 gleitbeweglich aufgenommen ist. An dem Ansteuerkolben 142 ist ein Dichtelement 144 angebracht, das die Ansteuerkammer 140 gegenüber der Steuerkammer 18' des Drosselventils 2' abdichtet. Über den Ansteuerkolben 142 kann der Steuerkolben 24' mechanisch beaufschlagt werden, wenn in der Ansteuerkammer 140 ein Steuerdruck aufgebaut wird. Schließlich weist die Ansteuerkammer 140 einen Anschluß 146 auf, über den sie an eine Steuerleitung 148 angeschlossen ist, die von der Steuerleitung 138 des Vorderrad-Bremskreises C abzweigt.

Wird nun der Geberzylinder 132 des Vorderrad-Bremskreises C betätigt, so schiebt der gleichfalls über die Steuerleitungen 138 und 148 hydraulisch angesteuerte Ansteuerkolben 142 im Drosselventil 2' des Hinterrad-Bremskreises D den Steuerkolben 24' und somit den Ventilkörper 10' unter gleichzeitigem Anlaufen der Hydraulikpumpe 78' in Richtung auf den Dichtsitz 44' an der Durchgangsbohrung 8' des Ventilkolbens 6', so daß durch Verkleinerung des Drosselspalts 12' in der Druckkammer 4' ein Staudruck erzeugt wird, der an dem Bremssattel 14' anliegt. Entsprechend dem Übersetzungsverhältnis der hydraulischen Wirkfläche am Ansteuerkolben 142 zur hydraulischen Wirkfläche des Ventilkörpers 10' am Dichtsitz 44' wird ohne Betätigung des Geberzylinders 132' des Hinterrad-Bremskreises D ein dem Druck in der Druckkammer 136 des Geberzylinders 132 im Vorderrad-Bremskreis C proportionaler Bremsdruck an den Bremssattel 14' des Hinterrad-Bremskreises D zur Erzeugung einer Bremskraft angelegt.

Ist der an den Bremssattel 14' des Hinterrad-Bremskreises D angelegte Bremsdruck so hoch, daß die Sensorik eine Blockierneigung am Hinterrad erkennt, so wird im Hinterrad-Bremskreis D eine Antiblockierregelung wie unter Bezugnahme auf die Fig. 1 beschrieben durchgeführt. Dabei zieht der aus Anker 26' und Magnetspule 34' bestehende Magnetantrieb den Steuerkolben 24' und somit den Ventilkörper 10' vom Dichtsitz 44' des Ventilkolbens 6' entgegen dem am Ansteuerkolben 142 in der Ansteuerkammer 140 anstehenden Steuerdruck weg, wobei der Ansteuerkolben 142 in der Ansteuerkammer 140 solange zurückfährt, bis der sich durch den größer werdenden Ventilspalt 12' des Drosselventils 2' vermindernde Staudruck den Erfordernissen entsprechend angeglichen ist.

Werden bei einer Bremsung beide Geberzylinder 132, 132' betätigt, so wird am Steuerkolben 24' des Drosselventils 2' nur der größere Steuerdruck von beiden durch Druckbeaufschlagung der Steuerkammer 18' bzw. Kraftbeaufschlagung über den Ansteuerkolben 142 wirksam. Dies ist darauf zurückzuführen, daß der Ansteuerkolben 142 einerseits von der Ansteuerkammer 140 aus mit dem Steuerdruck des Geberzylinders 132 des Vorderrad-Bremskreises C beaufschlagt wird, während andererseits der Steuerdruck des Geberzylinders 132' des Hinterrad-Bremskreises D über die Steuerkammer 18' des Drosselventils 2' auf den Ansteuerkolben 142 wirkt, wobei der Steuerdruck in der Steuerkammer 18' nach wie vor auch auf den Ventilbolzen 28' einwirkt. Am Ventilkörper 10' wirkt nun über den Ventilbolzen 28' eine Kraft, die gleich dem Produkt aus der Differenz der Steuerdrücke und der hydraulischen Wirkfläche des Ansteuerkolbens 142 ist, sofern diese Differenz positiv ist, sowie eine Kraft, die gleich dem Produkt aus dem Steuerdruck in der Steuerkammer 18' und der Querschnittsfläche des Ventilbolzens 28' ist. Über die dadurch bewirkte Schließbewegung am Ventilspalt 12' des Drosselventils 2' wird im Hinterrad-Bremskreis D ein Bremsdruck an den Bremssattel 14' angelegt. Ist dieser Bremsdruck zu hoch, was über die Sensorik erkannt wird, so erfolgt eine Antiblockierregelung wie bereits beschrieben. Die in Fig. 4 dargestellten erfindungsgemäßen Ventilanordnungen können entsprechend der Fig. 2 um weitere Drosselventile erweitert werden, so daß eine Antriebsschlupfregelung (ASR) durchgeführt werden kann. Auch ist eine direkte, d.h. mechanische Ansteuerung des Steuerkolbens 24' über den Bremshebel 134' prinzipiell möglich. Dazu muß der Steuerkolben 24' einen Bolzenansatz (nicht dargestellt) aufweisen, der sich zur Umgebung hydraulisch abgedichtet durch die Gehäusewandung des Ventilgehäuses 16' erstreckt.

Es wird eine Ventilanordnung für einen Fremdkraft-Bremskreis einer hydraulischen Bremsanlage offenbart, die ein Drosselventil aufweist, dessen Ventilkörper einen im fremdkraftunterstützten Bremsbetrieb mit einem Druckmittel zwangsdurchströmten Drosselspalt ansteuerbar begrenzt, um einen definierten, einem Zuspannorgan anlegbaren Staudruck in einer Druckkammer einzustellen, in der ein Ventilkolben mit einer Durchgangsbohrung aufgenommen ist. Bei Ausfall der Fremdkraftunterstützung ist der Ventilkolben zur Erzeugung eines Restbremsdrucks in der Druckkammer über den Ventilkörper unter Verschluß der Durchgangsbohrung verschiebbar. Da der Drosselspalt an der Durchgangsbohrung ausgebildet ist, wird eine sehr kompakte Ventilanordnung geschaffen, bei der der Ventilkörper nicht nur den Drosselspalt begrenzt, sondern auch als dichtendes Verschlußelement für die Durchgangsbohrung und der direkten Ansteuerung des Ventilkolbens dient, während der Bremsdruck in der Druckkammer jederzeit unmittelbar am Ventilkörper ansteht und somit gut an das Bremspedal zurückgemeldet werden kann.

### Bezugszeichenliste

- 2: Drosselventil (2', 2.1, 2.2, 2.1', 2.2')
- 4: Druckkammer (4', 4.1, 4.2, 4.1', 4.2')
- 6: Ventilkolben (6', 6.1, 6.2, 6.1', 6.2')
- 8: Durchgangsbohrung (8')
- 10: Ventilkörper (10', 10.1, 10.2, 10.1', 10.2')
- 12: Drosselspalt (12')
- 14: Bremssattel (14')
- 16: Ventilgehäuse (16')
- 18: Steuerkammer (18')
- 20: Ablaufkammer
- 22: Wandung
- 24: Steuerkolben (24')
- 26: Anker (26')
- 28: Ventilbolzen (28')
- 30: Dichtelement
- 32: Bohrung
- 34: Magnetspule (34')
- 36: Anschlag
- 38: Anschluß
- 40: Anschluß
- 42: Absatz
- 44: Dichtsitz (44')
- 46: Rückstellfeder
- 48: Schulter
- 50: Dichtelement
- 52: Kolbenfeder
- 54: Anschluß
- 56: Geberzylinder
- 58: erste Druckkammer
- 60: zweite Druckkammer
- 62: Bremspedal
- 64: Kolbenstange
- 66: erster Kolben
- 68: zweiter Kolben
- 70: Anschluß
- 72: Ausgleichsbehälter
- 74: Steuerleitung (74')
- 76: Druckleitung
- 76a: Druckleitungsabschnitt
- 76b: Druckleitungsabschnitt
- 78: Hydraulikpumpe (78')
- 80: Ansaugleitung
- 82: Vorratsbehälter
- 84: Rückschlagventil
- 86: Druckleitung
- 88: Kolben-Zylinder-Anordnung
- 90: Druckkammer
- 92: Kolben
- 94: Bremsbeläge
- 96: Bremsscheibe
- 98: Rücklaufleitung
- 100: Druckhalteventil
- 102: Pedalschalter
- 104: elektro-hydraulischer Druckschalter
- 106: Drosselventil
- 108: Ventilgehäuse
- 110: Druckkammer
- 112: Ablaufkammer
- 114: Steuerkammer
- 116: Rückstellfeder
- 118: Ventilkörper
- 120: Dichtsitz
- 122: Drosselspalt
- 124: Ventilbolzen
- 126: Wandung
- 128: Anker
- 130: Magnetspule
- 132: Geberzylinder (132')
- 134: Bremshebel (134')
- 136: Druckkammer (136')
- 138: Steuerleitung (138')
- 140: Ansteuerkammer
- 142: Ansteuerkolben
- 144: Dichtelement
- 146: Anschluß
- 148: Steuerleitung
- A: Fremdkraft-Bremskreis
- B: hydraulischer Steuerkreis
- C: Vorderrad-Bremskreis
- D: Hinterrad-Bremskreis
- s: Schließweg des Drosselspalts
- l: Hub des Ventilkolbens

## Patentansprüche

1. Ventilanordnung für einen Fremdkraft-Bremskreis einer hydraulischen Bremsanlage, mit einem Drosselventil (2), das einen Ventilkörper (10) aufweist, der einen im fremdkraftunterstützten Bremsbetrieb mit einem Druckmittel zwangsdurchströmten Drosselspalt (12) ansteuerbar begrenzt, um einen definierten, einem Zuspannorgan (14) der Bremsanlage anlegbaren Staudruck in einer Druckkammer (4) einzustellen, in der ein Ventilkolben (6) mit einer Durchgangsbohrung (8) aufgenommen ist, der bei Ausfall der Fremdkraftunterstützung zur Erzeugung eines Restbremsdrucks in der Druckkammer (4) über den Ventilkörper (10) unter Verschluß der Durchgangsbohrung (8) verschiebbar ist, **dadurch gekennzeichnet, daß** der Drosselspalt (12) an der Durchgangsbohrung (8) des Ventilkolbens (6) ausgebildet ist.

2. Ventilanordnung nach Anspruch 1, dadurch gekennzeichnet, daß der Ventilkörper (10) des Drosselventils (2) zur Einstellung des Drosselspalts (12) hydraulisch und elektromagnetisch ansteuerbar ist.

3. Ventilanordnung nach Anspruch 2, dadurch gekennzeichnet, daß das Drosselventil (2') eine Ansteuerkammer (140) aufweist, in der ein Ansteuerkolben (142) gleitbeweglich geführt ist, mittels dem der Ventilkörper (10') zur Einstellung des Drosselspalts (12') zusätzlich mechanisch verschiebbar ist.

4. Ventilanordnung nach einem der vorhergehenden Ansprüche, dadurch gekennzeichnet, daß das Drosselventil (2) als Kugelsitzventil mit einem kugelförmigen Ventilkörper (10) ausgebildet ist, der zusammen mit einem ringförmigen Dichtsitz (44) an der Durchgangsbohrung (8) des Ventilkolbens (6) den Drosselspalt (12) begrenzt.

5. Ventilanordnung nach einem der vorhergehenden Ansprüche, dadurch gekennzeichnet, daß das Drosselventil (2) ein Ventilgehäuse (16) hat, das neben der Druckkammer (4) eine von der Druckkammer (4) über den Ventilkolben (6) getrennte Ablaufkammer (20) aufweist, in der der Ventilkörper (10) aufgenommen ist, wobei im fremdkraftunterstützten Bremsbetrieb die Druckkammer (4) mit der Ablaufkammer (20) nur über die Durchgangsbohrung (8) im Ventilkolben (6) hydraulisch verbunden ist.

6. Ventilanordnung nach Anspruch 5, dadurch gekennzeichnet, daß das Ventilgehäuse (16) des Drosselventils (2) eine Steuerkammer (18) aufweist, die hydraulisch dicht von der Ablaufkammer (20) getrennt ist und die einen hydraulisch und elektromagnetisch ansteuerbaren Steuerkolben (24) aufnimmt, der vom Druckmittel in der Steuerkammer (18) im wesentlichen vollständig umspült ist und einen Ventilbolzen (28) hat, welcher sich abgedichtet von der Steuerkammer (18) in die Ablaufkammer (20) hineinerstreckt und mit dem Ventilkörper (10) wirkverbunden ist, so daß der Drosselspalt (12) des Drosselventils (2) über den Steuerkolben (24) hydraulisch eingestellt und im wesentlichen ohne Druckänderung in der Steuerkammer (18) elektromagnetisch geöffnet werden kann.

7. Ventilanordnung nach einem der vorhergehenden Ansprüche, gekennzeichnet durch ein weiteres Drosselventil (106), das in Strömungsrichtung des Druckmittels vor der Druckkammer (4) des Drosselventils (2) angeordnet und dessen Drosselspalt (122) unabhängig vom Drosselventil (2) elektromagnetisch einstellbar ist, um einen definierten Staudruck zu erzeugen, der dem Zuspannorgan (14) der Bremsanlage anlegbar ist.

## Claims

1. Valve arrangement for an external force brake circuit of a hydraulic brake system, with a throttle valve (2) having a valve body (10), which controllably limits a throttle gap (12) forcibly flown-through by a pressure medium in external force-assisted brake operation, in order to set a clearly defined dynamic pressure in a pressure chamber (4) to be applied to a tension member (14) of the brake system and in which is received a valve piston (6) with a through-bore (8), which in the case of a failure of the external force assistance for producing a residual brake pressure in the pressure chamber (4) can be displaced by means of the valve body (10), accompanied by the closure of the through-bore (8), characterized in that the throttle gap (12) is constructed at the through-bore (8) of the valve piston (6).

2. Valve arrangement according to claim 1, characterized in that the valve body (10) of the throttle valve (2) is hydraulically and electromagnetically controllable for adjusting the throttle gap (12).

3. Valve arrangement according to claim 2, characterized in that the throttle valve (2') has a control chamber (140), in which is slidably guided a control piston (142) by means of which the valve body (10') is additionally mechanically displaceable for adjusting the throttle gap (12').

4. Valve arrangement according to one of the preceding claims, characterized in that the throttle valve (2) is constructed as a ball seat valve with a spherical valve body (10) which, together with an annular sealing seat (44) at the through-bore (8) of the valve piston (6), bounds the throttle gap (12).

5. Valve arrangement according to one of the preceding claims, characterized in that the throttle valve (2) has a valve housing (16) which, besides the pressure chamber (4), has an outlet chamber (20) separated from the pressure chamber (4) by means of the valve piston (6) and in which is received the valve body (10) and in external force-assisted brake operation the pressure chamber (4) is only hydraulically connected to the outlet chamber (20) by means of the through-bore (8) in the valve piston (6).

6. Valve arrangement according to claim 5, characterized in that the valve housing (16) of the throttle valve (2) has a control chamber (18), which is hydraulically tightly separated from the outlet chamber (20) and receives a hydraulically and electromagnetically controllable control piston (24), around which substantially completely flows pressure medium in the control chamber (18) and has a valve pin (28), which extends in sealed manner from the control chamber (18) into the outlet chamber (20) and is operatively connected to the valve body (10), so that the throttle gap (12) of the throttle valve (2) is hydraulically adjusted by means of the control piston (24) and can be electromagnetically opened substantially without any pressure change in the control chamber (18).

7. Valve arrangement according to one of the preceding claims, characterized by a further throttle valve (106), which is placed in the flow direction of the pressure medium upstream of the pressure chamber (4) of the throttle valve (2) and whose throttle gap (122) is electromagnetically adjustable independently of the throttle valve (2) in order to produce a clearly defined dynamic pressure, which can be applied to the tension member (14) of the brake system.

## Revendications

1. Dispositif à soupape pour un circuit de frein assisté d'un système de freinage hydraulique, avec une soupape d'étranglement (2) comportant un corps de soupape (10) qui limite de manière commandée une fente d'étranglement (12) traversée, lors du freinage assisté, par un courant forcé d'agent de pression, afin de régler une pression dynamique définie apte à être appliquée à un organe d'application de frein (14) du système de freinage, dans une chambre de pression (4) dans laquelle est logé un piston de soupape (6) qui présente un perçage de passage (8) et qui, en cas de panne de l'assistance de frein, est apte à se déplacer pour produire une pression de freinage résiduelle dans la chambre de pression (4) par l'intermédiaire du corps de soupape (10), moyennant une obturation du perçage de passage (8), caractérisé en ce que la fente d'étranglement (12) est formée au niveau du perçage de passage (8) du piston de soupape (6).

2. Dispositif à soupape selon la revendication 1, caractérisé en ce que le corps (10) de la soupape d'étranglement (2) est apte à être commandé par voie hydraulique et électromagnétique pour régler la fente d'étranglement (12).

3. Dispositif à soupape selon la revendication 2, caractérisé en ce que la soupape d'étranglement (2') comporte une chambre de commande (140) dans laquelle est guidé, coulissant, un piston de commande (142) à l'aide duquel le corps de soupape (10') peut en outre être déplacé mécaniquement pour régler la fente d'étranglement (12').

4. Dispositif à soupape selon l'une des revendications précédentes, caractérisé en ce que la soupape d'étranglement (2) est conçue comme une soupape sphérique à siège et comprend un corps de soupape sphérique (10) qui, avec un siège d'étanchéité annulaire (44), limite la fente d'étranglement (12) au niveau du perçage de passage (8) du piston de soupape (6).

5. Dispositif à soupape selon l'une des revendications précédentes, caractérisé en ce que la soupape d'étranglement (2) a une enveloppe de soupape (16) qui comporte, près de la chambre de pression (4), une chambre de décharge (20) qui est séparée de celle-ci par le piston de soupape (6) et dans laquelle est logé le corps de soupape (10), étant précisé que lors du freinage assisté, la chambre de pression (4) n'est reliée par voie hydraulique à la chambre de décharge (20) que par l'intermédiaire du perçage de passage (8) prévu dans le piston de soupape (6).

6. Dispositif à soupape selon la revendication 5, caractérisé en ce que l'enveloppe (16) de la soupape d'étranglement (2) comporte une chambre de commande (18) qui est séparée de manière étanche, hydrauliquement, de la chambre de décharge (20) et qui reçoit un piston de commande (24) à commande hydraulique et électromagnétique, lequel est pratiquement entièrement entouré par l'écoulement d'agent de pression dans la chambre de commande (18) et comporte une tige de soupape (28) qui s'étend de manière étanche de la chambre de commande (18) jusque dans la chambre de décharge (20) et est en relation fonctionnelle avec le corps de soupape (10), de sorte que la fente d'étranglement (12) de la soupape d'étranglement (2) peut être réglée par voie hydraulique par l'intermédiaire du piston de commande (24) et s'ouvrir par voie électromagnétique pratiquement sans variation de pression dans la chambre de commande (18).

7. Dispositif à soupape selon l'une des revendications précédentes, caractérisé par une autre soupape d'étranglement (106) qui est disposée devant la chambre de pression (4) de la soupape d'étranglement (2), dans le sens d'écoulement de l'agent de pression, et dont la fente d'étranglement (122) est réglable par voie électromagnétique indépendamment de la soupape d'étranglement (2) pour produire une pression dynamique définie apte à être appliquée à l'organe d'application de frein (14) du système de freinage.
